# EUROPÄISCHE PATENTANMELDUNG

(11) **EP 1 748 531 A1**
(43) Veröffentlichungstag der Anmeldung: **31.01.2007**
(21) Anmeldenummer: 05016463.1
(22) Anmeldetag: 28.07.2005
(51) Int. Cl.: H02K 1/14, H02K 15/02

(54) **Verfahren zur Herstellung eines Statorpaketes mit radial nach innen gerichteten Statorzähnen**

(71) Anmelder: SIEMENS AKTIENGESELLSCHAFT, 80333 München (DE)
(72) Erfinder: Drexlmaier, Thomas, 97072 Würzburg (DE)

(57) **Zusammenfassung**

Die Erfindung betrifft ein Verfahren zur Herstellung eines Statorpaketes mit einem Statorkern und radial nach innen gerichteten, bewickelten Statorzähnen. Es weist folgende Verfahrensschritte auf:
- Herstellen eines Blechlamellen aufweisenden Stanzbiegeteils, welches den Statorkern und die Statorzähne aufweist, als ringförmiges Stanzbiegeteil, bei welchem die Statorzähne radial nach außen gerichtet sind,
- unterbrechungsfreies Bewickeln der Statorzähne mit der Statorwicklung und
- ringförmiges Biegen des mit der Statorwicklung bewickelten Stanzbiegeteils derart, dass die Statorzähne radial nach innen gerichtet sind.

## Beschreibung

Die Erfindung betrifft ein Verfahren zur Herstellung eines Statorpaketes mit radial nach innen gerichteten, bewickelten Statorzähnen.

Elektrische Maschinen, wie sie beispielsweise in Kraftfahrzeugen als Scheibenwischermotor oder zum Heben und Senken der Scheiben des Kraftfahrzeugs verwendet werden, weisen einen Stator und einen Rotor auf. Der Stator ist in Form eines Statorpaketes realisiert, welches den Statorkern, Statorzähne und die Statorwicklung aufweist. Die Statorwicklung enthält mehrere Phasenstränge, die jeweils aus mehreren Einzelwicklungen bestehen. Jede der Einzelwicklungen ist um einen der Statorzähne gewickelt. Der Außenumfang des Statorkernes ist im Wesentlichen zylinderförmig ausgebildet und hat eine in etwa runde Querschnittsfläche. Die Statorzähne erstrecken sich ausgehend vom Statorkern radial nach innen. Der Rotor enthält eine Rotorwelle, an welcher die Rotorwicklung oder ein Rotorkörper mit eingebetteten Permanentmagneten befestigt ist. Die Rotorwelle mit der Rotorwicklung bzw. dem Rotorkörper ist in einer radialen Innenausnehmung des Stators drehbeweglich gelagert.

Ein Nachteil bisher bekannter Statorpakete, bei denen die bewickelten Statorzähne radial nach innen gerichtet sind, besteht darin, dass bei der Bewicklung der Statorzähne mit der Statorwicklung nur ein begrenzter Füllfaktor der zwischen den Statorzähnen befindlichen Statornuten erreicht werden kann. Dies ist im Wesentlichen auf die übliche Wickeltechnologie zurückzuführen. Werden beispielsweise Nadelwickler verwendet, dann wird ein erheblicher Teil des zur Verfügung stehenden Wickelraumes für die Führung der Nadel benötigt.

Aus der US 2004/0051417 A1 ist bereits ein Verfahren zur Herstellung des Stators eines Motors bekannt, bei welchem der Stator aus einer Vielzahl von Statorsegmenten zusammengesetzt ist. Jedes dieser Statorsegmente weist an den Übergangsstellen zu einem Nachbarsegment eine spezielle Formgebung auf. Eine dieser Übergangsstellen ist konvex geformt, die andere konkav. Bei der Bewicklung der einzelnen Statorzähne sind die Statorsegmente gemäß einer Ausführungsform voneinander beabstandet und gemäß einer zweiten Ausführungsform in einem vorgegebenen Winkel relativ zueinander positioniert.

Der Erfindung liegt die Aufgabe zugrunde, ein Verfahren zur Herstellung eines Statorpaketes mit radial nach innen gerichteten, bewickelten Statorzähnen anzugeben, bei dem die Bewicklung der Statorzähne verbessert ist und bei dem die Herstellung des Statorpaketes vereinfacht ist.

Diese Aufgabe wird durch ein Verfahren mit den im Patentanspruch 1 angegebenen Merkmalen gelöst. Vorteilhafte Ausgestaltungen und Weiterbildungen der Erfindung sind in den abhängigen Patentansprüchen 2 und 3 angegeben. Die Patentansprüche 4 und 5 betreffen ein Statorpaket, welches nach einem Verfahren gemäß einem der Patentansprüche 1 - 3 hergestellt wurde.

Die Vorteile der Erfindung bestehen insbesondere darin, dass die als Wickelraum zur Verfügung stehenden Statornuten beim fertiggestellten Statorpaket einen hohen Füllstand aufweisen. Dies ist darauf zurückzuführen, dass der Wickelvorgang bei radial nach außen gerichteten Statorzähnen erfolgt. Dabei steht für die Bewicklung eines Statorzahnes wesentlich mehr Platz zur Verfügung als bei der Bewicklung eines Statorzahnes, der radial nach innen gerichtet ist. Dieses vergrößerte Platzangebot beim Bewickeln kann - wenn Nadelwickler oder Flyerwickler zum Einsatz kommen - zur Führung der Nadel verwendet werden. Wird dann nach dem Bewickeln der Statorzähne das Stanzbiegeteil, welches den Statorkern und die Statorzähne aufweist, derart gebogen, dass die Statorzähne radial nach innen gerichtet sind, dann weisen die Statornuten einen hohen Füllstand auf. Dies bedeutet mit anderen Worten, dass die Statornuten bei Bedarf weitgehend vollständig mit Wicklungsmaterial gefüllt werden können.

Ein weiterer Vorteil der Erfindung besteht darin, dass der Wickelvorgang unterbrechungsfrei erfolgen kann. Weist das Statorpaket beispielsweise achtzehn Statorzähne und drei Phasenwicklungen mit jeweils sechs Einzelwicklungen auf, dann wird beispielsweise der erste, vierte, siebte, zehnte, dreizehnte und sechzehnte Statorzahn mit den sechs zur ersten Phase gehörenden Einzelwicklungen versehen, danach zweite, fünfte, achte, elfte, vierzehnte und siebzehnte Statorzahn mit den sechs zur zweiten Phase gehörenden Einzelwicklungen versehen und schließlich der dritte, sechste, neunte, zwölfte, fünfzehnte und achtzehnte Statörzahn mit den sechs zur dritten Phase gehörenden Einzelwicklungen versehen. Alle diese Einzelwicklungen können maschinell und unterbrechungsfrei aufgewickelt werden, d. h. ohne jegliche Durchtrennung des Wickeldrahtes. Erst nach der Fertigstellung aller Einzelwicklungen wird der Wickeldraht in grundsätzlich bekannter Weise durchtrennt und fixiert. Bei dieser Vorgehensweise ist das Herstellen eines Statorpaketes unter Serienbedingungen in einfacher und kostengünstiger Weise möglich.

Weitere vorteilhafte Eigenschaften der Erfindung ergeben sich aus deren beispielhafter Erläuterung anhand der Figuren. Es zeigt
- Figur 1: eine Skizze zur Veranschaulichung eines ersten Ausführungsbeispiels für ein Verfahren zur Herstellung eines Statorpaketes mit einem Statorkern und radial nach innen gerichteten Statorzähnen,
- Figur2: eine Skizze zur Veranschaulichung eines zweiten Ausführungsbeispiels für ein Verfahren zur Herstellung eines Statorpaketes mit einem Statorkern und radial nach innen gerichteten Statorzähnen,
- Figur 3: eine Skizze zur Veranschaulichung eines dritten Ausführungsbeispiels für ein Verfahren zur Herstellung eines Statorpaketes mit einem Statorkern und radial nach innen gerichteten Statorzähnen und
- Figur 4: eine Skizze zur Veranschaulichung eines Vorteils der Erfindung.

Die Erfindung betrifft ein Verfahren zur Herstellung eines Statorpaketes mit einem Statorkern und radial nach innen gerichteten, bewickelten Statorzähnen. Der Statorkern und die Statorzähne werden in Form eines Blechlamellen aufweisenden Stanzbiegeteils hergestellt, bei welchem die Statorzähne radial nach außen gerichtet sind. Die Bewicklung der Statorzähne mit der Statorwicklung erfolgt bei radial nach außen gerichteten Statorzähnen beispielsweise mittels eines Nadelwicklers oder eines Flyerwicklers, mittels welchem sich die Wicklungen lagenweise und ohne Kreuzungen aufbringen lassen, so dass insgesamt eine kompakte Primärwicklung mit geringer Auftragung entsteht. Da bei radial nach außen gerichteten Statorzähnen wegen der vergrößerten Abstände zwischen den Statorzähnen mehr Platz für den Wickelvorgang zur Verfügung steht als bei nach innen gerichteten Statorzähnen, können die Einzelwicklungen derart erstellt werden, dass bei dem letztendlich hergestellten Statorpaket, bei dem die bewickelten Statorzähne radial nach innen gerichtet sind, die Statornuten einen hohen Füllstand aufweisen bzw. weitgehend vollständig mit Wickeldraht gefüllt sind.

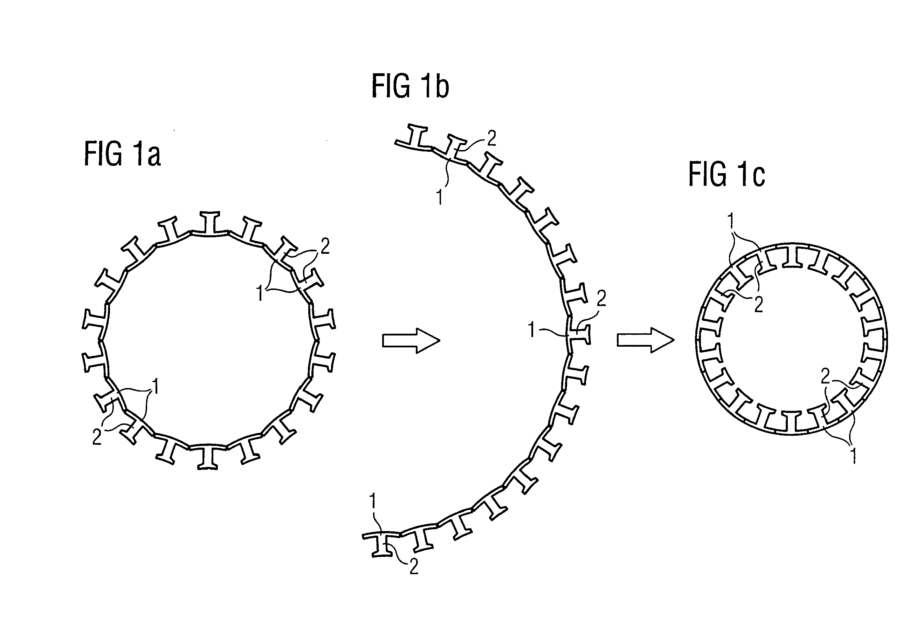

Die Figur 1 zeigt eine Skizze zur Veranschaulichung eines ersten Ausführungsbeispiels für ein Verfahren zur Herstellung eines Statorpaketes mit einem Statorkern und radial nach innen gerichteten Statorzähnen.

Bei diesem ersten Ausführungsbeispiel wird zunächst ein Blechlamellen aufweisendes, einstückiges Stanzbiegeteil hergestellt. Dieses Stanzbiegeteil ist in der Figur 1a dargestellt. Es ist ringförmig geformt und weist den Statorkern 1 und achtzehn Statorzähne 2 auf, wobei die Statorzähne 2 ausgehend vom Statorkern 1 radial nach außen gerichtet sind.

Auf diese radial nach außen gerichteten Statorzähne erfolgt in einem nicht in der Figur dargestellten darauffolgenden Schritt ein unterbrechungsfreies Bewickeln der Statorzähne 2 mit der Statorwicklung. Diese besteht beispielsweise aus drei Phasenwicklungen, von denen jede sechs Einzelwicklungen aufweist. Zunächst werden der erste, vierte, siebte, zehnte, dreizehnte und sechzehnte Statorzahn mit den sechs Einzelwicklungen der ersten Phasenwicklung bewickelt. Danach erfolgt eine Bewicklung des zweiten, fünften, achten, elften, vierzehnten und siebzehnten Statorzahnes mit den sechs Einzelwicklungen der zweiten Phasenwicklung. Schließlich werden der dritte, sechste, neunte, zwölfte, fünfzehnte und achtzehnte Statorzahn mit den sechs Einzelwicklungen der dritten Phasenwicklung bewickelt.

Dieser vorstehend beschriebene Wicklungsvorgang kann unter Serienbedingungen schnell und kostengünstig mittels einer Wickelmaschine, beispielsweise eines Nadelwicklers oder eines Flyerwicklers, durchgeführt werden. Wegen der radial nach außen gerichteten Statorzähne steht dabei vergleichsweise viel Platz für die Führung der Nadel zur Verfügung.

Ist die Statorwicklung fertiggestellt, dann erfolgt ein Auftrennen des Stanzbiegeteils, wie es in der Figur 1b veranschaulicht ist, und ein Umformen bzw. ringförmiges Biegen des Stanzbiegeteils derart, dass die Statorzähne 2 radial nach innen gerichtet sind. Dies ist in der Figur 1c veranschaulicht. Dabei ist die bereits aufgebrachte Statorwicklung in den Figuren 1b und 1c aus Gründen der Übersichtlichkeit nicht dargestellt.

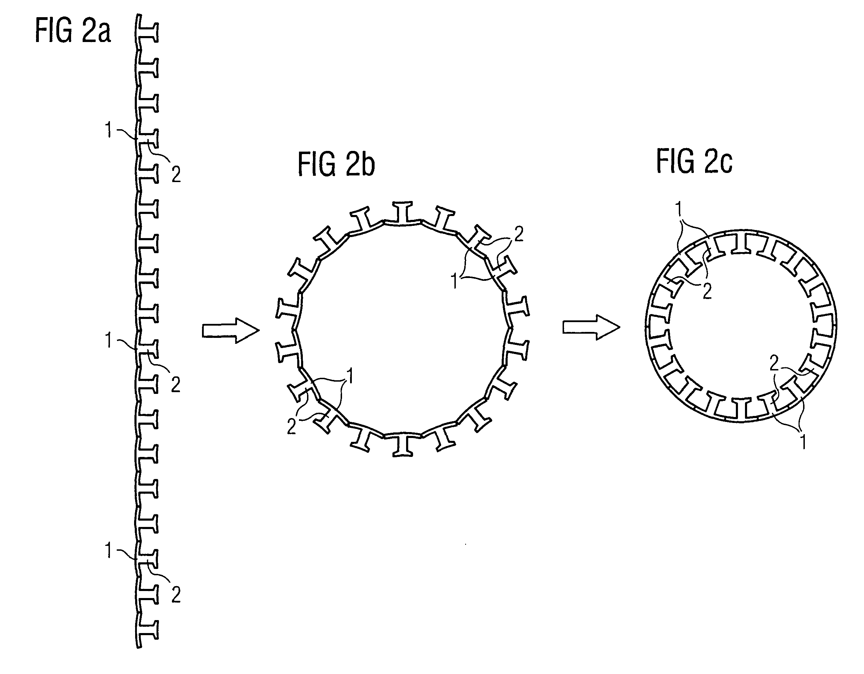

Die Figur 2 zeigt ein zweites Ausführungsbeispiel für ein Verfahren zur Herstellung eines Statorpaketes mit einem Statorkern und radial nach innen gerichteten Statorzähnen.

Bei diesem zweiten Ausführungsbeispiel wird zunächst ein Blechlamellen aufweisendes, einstückiges Stanzbiegeteil hergestellt, das in der Figur 2a dargestellt ist. Es ist in Form eines geraden Streifens gestanzt und weist den Statorkern 1 und achtzehn Statorzähne 2 auf.

Dieser geradlinig verlaufende Statorkern 1 wird in einem nächsten Schritt noch vor dem Bewickeln der Statorzähne derart ringförmig verbogen, dass die Statorzähne 2 ausgehend vom Statorkern radial nach außen gerichtet sind. Dies ist in der Figur 2b gezeigt.

Auf diese radial nach außen gerichteten Statorzähne erfolgt in einem nicht in der Figur dargestellten darauf folgenden Schritt ein unterbrechungsfreies Bewickeln der Statorzähne 2 mit der Statorwicklung. Diese besteht beispielsweise aus drei Phasenwicklungen, von denen jede sechs Einzelwicklungen aufweist. Zunächst werden der erste, vierte, siebte, zehnte, dreizehnte und sechzehnte Statorzahn mit den sechs Einzelwicklungen der ersten Phasenwicklung bewickelt. Danach erfolgt eine Bewicklung des zweiten, fünften, achten, elften, vierzehnten und siebzehnten Statorzahnes mit den sechs Einzelwicklungen der zweiten Phasenwicklung. Schließlich werden der dritte, sechste, neunte, zwölfte, fünfzehnte und achtzehnte Statorzahn mit den sechs Einzelwicklungen der dritten Phasenwicklung bewickelt.

Dieser vorstehend beschriebene Wicklungsvorgang kann unter Serienbedingungen schnell und kostengünstig mittels einer Wickelmaschine, beispielsweise eines Nadelwicklers oder eines Flyerwicklers, durchgeführt werden. Wegen der radial nach außen gerichteten Statorzähne steht dabei vergleichsweise viel Platz für die Führung der Nadel zur Verfügung.

Ist die Statorwicklung fertiggestellt, dann erfolgt ein Auftrennen des Stanzbiegeteils und ein Umformen bzw. ringförmiges Biegen des Stanzbiegeteils derart, dass die Statorzähne 2 radial nach innen gerichtet sind. Dies ist in der Figur 2c veranschaulicht. Die bereits aufgebrachte Statorwicklung ist in der Figur 2c aus Gründen der Übersichtlichkeit nicht dargestellt.

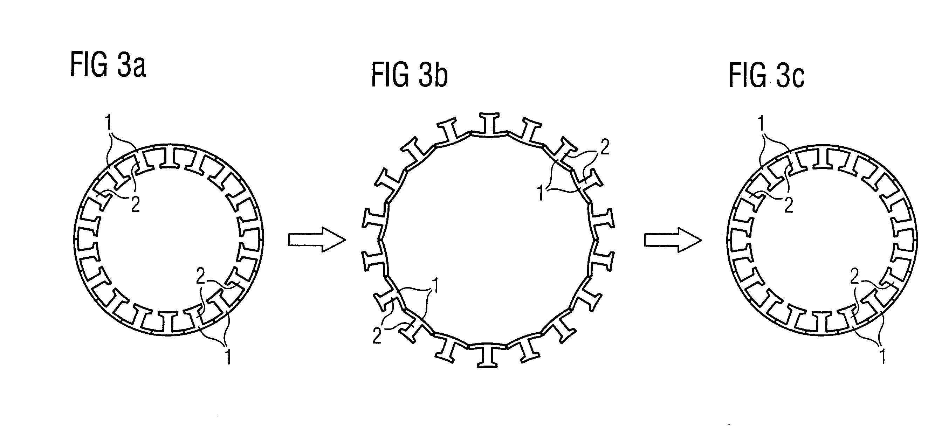

Die Figur 3 zeigt eine Skizze zur Veranschaulichung eines dritten Ausführungsbeispiels für ein Verfahren zur Herstellung eines Statorpaketes mit einem Statorkern und radial nach innen gerichteten Statorzähnen.

Bei diesem dritten Ausführungsbeispiel wird zunächst ein Blechlamellen aufweisendes, einstückiges Stanzbiegeteil hergestellt, das in der Figur 3a dargestellt ist. Dieses Stanzbiegeteil ist ringförmig geformt und weist den Statorkern 1 und achtzehn Statorzähne 2 auf, wobei die Statorzähne 2 ausgehend vom Statorkern 1 radial nach innen gerichtet sind.

In einem nächsten Schritt wird dieses Stanzbiegeteil noch vor dem Bewickeln mit der Statorwicklung aufgetrennt und derart umgeformt bzw. ringförmig verbogen, dass die Statorzähne 2 ausgehend vom Statorkern 1 radial nach außen gerichtet sind. Dies ist in der Figur 3b dargestellt.

Auf diese radial nach außen gerichteten Statorzähne erfolgt in einem nicht in der Figur dargestellten darauf folgenden Schritt ein unterbrechungsfreies Bewickeln der Statorzähne 3 mit der Statorwicklung. Diese besteht beispielsweise aus drei Phasenwicklungen, von denen jede sechs Einzelwicklungen aufweist. Zunächst werden der erste, vierte, siebte, zehnte, dreizehnte und sechzehnte Statorzahn mit den sechs Einzelwicklungen der ersten Phasenwicklung bewickelt. Danach erfolgt eine Bewicklung des zweiten, fünften, achten, elften, vierzehnten und siebzehnten Statorzahnes mit den sechs Einzelwicklungen der zweiten Phasenwicklung. Schließlich werden der dritte, sechste, neunte, zwölfte, fünfzehnte und achtzehnte Statorzahn mit den sechs Einzelwicklungen der dritten Phasenwicklung bewickelt.

Dieser vorstehend beschriebene Wicklungsvorgang kann unter Serienbedingungen schnell und kostengünstig mittels einer Wickelmaschine, beispielsweise eines Nadelwicklers oder eines Flyerwicklers, durchgeführt werden. Wegen der radial nach außen gerichteten Statorzähne steht dabei vergleichsweise viel Platz für die Führung der Nadel zur Verfügung.

Ist die Statorwicklung fertiggestellt, dann erfolgt ein Auftrennen des Stanzbiegeteils, wie es in der Figur 1b veranschaulicht ist, und ein Umformen bzw. ringförmiges Biegen des Stanzbiegeteils derart, dass die Statorzähne 2 radial nach innen gerichtet sind. Dies ist in der Figur 3c veranschaulicht. Dabei ist die bereits aufgebrachte Statorwicklung in der Figur 3c aus Gründen der Übersichtlichkeit nicht dargestellt.

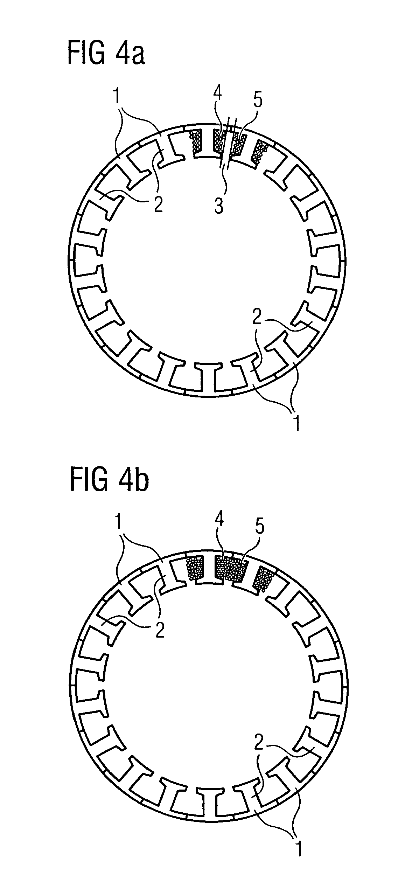

Die Figur 4 zeigt eine Skizze zur Veranschaulichung eines Vorteils der Erfindung. Dabei ist in der Figur 4a ein Statorpaket gemäß dem Stand der Technik dargestellt, bei welchem zwei der Statorzähne mit Einzelwicklungen 4, 5 versehen sind. Es ist ersichtlich, dass zwischen den beiden Einzelwicklungen 4 und 5 ein vergleichsweise großer Abstand 3 besteht. Dies bedeutet, dass die für die Wicklungen zur Verfügung stehenden Statornuten nicht vollständig mit Wickeldraht gefüllt werden können, da beim bekannten Wickelvorgang, bei dem das Bewickeln der Statorzähne bei radial nach innen gerichteten Statorzähnen erfolgt, Platz für die Führung der Nadel benötigt wird.

In der Figur 4b ist ein gemäß der Erfindung hergestelltes Statorpaket dargestellt, bei welchem ebenfalls zwei mit Einzelwicklungen 4 und 5 versehene Statorzähne gezeigt sind. Es ist ersichtlich, dass die Einzelwicklungen 4 und 5 nahezu abstandsfrei zueinander sind. Dies bedeutet, dass die für die Wicklungen zur Verfügung stehenden Statornuten vollständig mit Wickeldraht gefüllt werden können, da beim Wickelvorgang aufgrund der radial nach außen gerichteten Statorzähne mehr Platz für die Führung der Nadel zur Verfügung steht.

Insbesondere können mittels des erfindungsgemäßen Verfahrens Statorpakete hergestellt werden, bei denen der Abstand zwischen zwei benachbarten bewickelten Statorzähnen kleiner als 10% des Abstands zwischen den beiden Statorzähnen vor deren Bewicklung ist.

## Patentansprüche

1. Verfahren zur Herstellung eines Statorpaketes mit einem Statorkern und radial nach innen gerichteten, bewickelten Statorzähnen, mit folgenden Verfahrensschritten:
- Herstellen eines Blechlamellen aufweisenden Stanzbiegeteils, welches den Statorkern und die Statorzähne aufweist, als ringförmiges Stanzbiegeteil, bei welchem die Statorzähne radial nach außen gerichtet sind,
- unterbrechungsfreies Bewickeln der Statorzähne mit der Statorwicklung und
- ringförmiges Biegen des mit der Statorwicklung bewickelten Stanzbiegeteils derart, dass die Statorzähne radial nach innen gerichtet sind.

2. Verfahren nach Anspruch 1, **dadurch gekennzeichnet, dass** beim Herstellen des Stanzbiegeteils in einem ersten Schritt ein Stanzbiegeteil mit geradlinig verlaufendem Statorkern hergestellt wird und dann in einem zweiten Schritt dieser geradlinig verlaufende Statorkern vor dem Bewickeln der Statorzähne derart ringförmig verbogen wird, dass die Statorzähne radial nach außen gerichtet sind.

3. Verfahren nach Anspruch 1, **dadurch gekennzeichnet, dass** beim Herstellen des Stanzbiegeteils in einem ersten Schritt ein Stanzbiegeteil mit radial nach innen gerichteten Statorzähnen hergestellt wird und dass dann in einem zweiten Schritt dieses Stanzbiegeteil vor dem Bewickeln der Statorzähne derart ringförmig verbogen wird, dass die Statorzähne radial nach außen gerichtet sind.

4. Statorpaket, welches einen Statorkern und radial nach innen gerichtete, bewickelte Statorzähne aufweist und nach einem Verfahren gemäß einem der vorhergehenden Ansprüche hergestellt ist.

5. Statorpaket nach Anspruch 4, **dadurch gekennzeichnet, dass** der Abstand zwischen zwei benachbarten, bewickelten Statorzähnen kleiner als 10% des Abstands zwischen den beiden Statorzähnen vor deren Bewicklung ist.
